# EUROPEAN PATENT APPLICATION

(11) **EP 4 848 361 A1**
(43) Date of publication of application: **02.12.2026**
(21) Application number: 25849213.1
(22) Date of filing: 28.10.2025
(51) Int. Cl.: H01M 4/36, H01M 10/0525, H01M 4/58, H01M 4/62, C01B 25/45, C01B 32/15, B82Y 30/00, B82Y 40/00

(54) **LITHIUM IRON PHOSPHATE POSITIVE ELECTRODE MATERIAL AND PREPARATION METHOD THEREFOR, AND LITHIUM BATTERY**

(30) Priority: 28.03.2025 CN 202510376785
(71) Applicant: Guangdong Brunp Recycling Technology Co., Ltd., Foshan, Guangdong 528137 (CN)
(72) Inventor: LI, Changdong, Foshan, Guangdong 528137 (CN); HUANG, Weiyan, Foshan, Guangdong 528137 (CN); WANG, Tao, Foshan, Guangdong 528137 (CN); YU, Haijun, Foshan, Guangdong 528137 (CN)
(74) Representative: Maidment, Marc
(86) International application number: PCT/CN2025/130599
(87) International publication number: WO 2026/199909

(57) **Abstract**

The present disclosure provides a lithium iron phosphate cathode material, a preparation method therefor and a lithium-ion battery, and relates to the technical field of lithium-ion batteries. In the present disclosure, the compaction index of the lithium iron phosphate cathode material is determined with a specific method, the compaction index is controlled to fall within a specific range, and the average circularity of larger particles within a range of Dv50-Dv100 is maintained within an appropriate range. Such lithium iron phosphate cathode material exhibits superior particle mobility, enabling rapid particle movement and rearrangement during compaction, facilitating formation of a cathode sheet with high compacted density, and improving the charge and discharge capacity of a battery. Furthermore, particle fracture during compaction can be avoided, imparting high fracture resistance to the material. The lithium-ion battery comprising the lithium iron phosphate cathode material provided in the present disclosure has both high energy density and high capacity retention.

## Description

### CROSS-REFERENCE TO RELATED APPLICATIONS

The present disclosure claims priority of Chinese patent application No. 2025103767850 filed to the China National Intellectual Property Administration on March 28, 2025, entitled "LITHIUM IRON PHOSPHATE CATHODE MATERIAL, PREPARATION METHOD THEREFOR, AND LITHIUM**-**ION BATTERY", the entire contents of which are incorporated herein by reference.

### TECHNICAL FIELD

The present disclosure relates to the technical field of lithium-ion batteries, and in particular to a lithium iron phosphate cathode material, a preparation method therefor, and a lithium-ion battery.

### BACKGROUND

Lithium iron phosphate is currently one of the most competitive cathode active materials for lithium-ion batteries on the market. Compared with lithium cobalt oxide and ternary cathode materials, it has a longer cycle life and superior safety performance. In addition, since lithium iron phosphate has a theoretical specific capacity of 170 mAh·g⁻¹ and a plateau discharge voltage of 3.4V, it possesses considerable energy density.

Tap density and compacted density (collectively referred to as bulk density) are critical indicators for evaluating a cathode material. The tap density refers to the bulk density of a powder material achieved by tapping the powder, while the compacted density refers to the bulk density obtained after compressing and stabilizing the powder. Therefore, both of which reflect the mass of a cathode material per unit volume, which will directly affect the compacted density of a prepared electrode sheet, and thus affect the energy density of a battery. Due to its crystal structure, a lithium iron phosphate cathode material has low ion diffusion rate and poor electrical conductivity. Therefore, both the tap density and compacted density of a lithium iron phosphate cathode material are commonly enhanced by using a particle size grading method, thereby achieving a favorable balance between high bulk density and Li⁺ diffusion rate. However, the tap density and compacted density of the cathode material are not only limited by particle size distribution, but also are influenced by various other factors.

To this end, the present disclosure is proposed hereby.

### SUMMARY

The objective of the present disclosure is to provide a lithium iron phosphate cathode material, a preparation method thereof, and a lithium-ion battery, so as to provide a lithium iron phosphate cathode material possessing high compacted density and excellent cycle performance.

The present disclosure is implemented as follows.

In a first aspect, the present disclosure provides a lithium iron phosphate cathode material, including a lithium iron phosphate active material, and a carbon coating layer on a surface of the lithium iron phosphate active material;
wherein an average circularity of particles of the lithium iron phosphate cathode material within a range of Dv50-Dv100 is greater than or equal to 0.6; and
a compaction index Øc of the lithium iron phosphate cathode material is 0.4 to 5.0, and the compaction index is obtained by a method comprising:
   obtaining density-pressure curves of the lithium iron phosphate cathode material at different compaction speeds, performing linear fitting on the part of each density-pressure curve above 100 MPa to obtain the corresponding slope, constructing a plot of slope versus compaction speed, and subjecting the plot of slope versus compaction speed to linear fitting to obtain a fitted line and taking a slope of the fitted line as the compaction index.

In alternative embodiments, a particle strength of the lithium iron phosphate cathode material is 40 MPa to 150 MPa.

In alternative embodiments, the lithium iron phosphate cathode material satisfies at least one of the follows features:
Feature A1: the particle strength is 60 MPa to 120 MPa;
Feature A2: the average circularity of the particles in the range of Dv50-Dv100 is 0.65 to 0.80;
Feature A3: a compacted density is 1.5 g/cm³ to 3.0 g/cm³; and
Feature A4: a mass fraction of the carbon coating layer in the lithium iron phosphate cathode material is 0.5% to 5%.

In alternative embodiments, a compactibility factor is defined as: compactibility $factor = \frac{Particle strength}{∅ c}$; and the lithium iron phosphate cathode material has a compactibility factor of 120 MPa to 300 MPa.

In a second aspect, the present disclosure provides a preparation method of the lithium iron phosphate cathode material according to any one of the aforementioned embodiments, including: mixing iron phosphate and a polymer solution containing lithium ions, and then mixing a resulting mixture with a curing agent for curing reaction to obtain a gel; wherein the polymer solution containing lithium ions is obtained by dissolving a soluble lithium salt and a polymer in a solvent;
fragmenting the gel, and then drying to obtain a precursor;
subjecting the precursor to calcination to prepare a carbon-coated lithium iron phosphate; and
blending the carbon-coated lithium iron phosphate with different particle sizes.

In alternative embodiments, a process for preparing the gel has at least one of the following features:
Feature B1: the polymer is a soluble polymer containing at least one of hydroxyl, vinyl, and epoxy; the curing agent is selected based on reactive groups contained in the polymer; when the polymer contains hydroxyl, the curing agent is glycidyl ether; when the polymer contains vinyl, the curing agent is a soluble photoinitiator; and when the polymer contains epoxy, the curing agent is polyol;
Feature B2: the soluble lithium salt is at least one selected from the group consisting of lithium chloride, lithium hydroxide, lithium acetate, and lithium oxalate;
Feature B3: the solvent is at least one selected from the group consisting of water, ethanol, methanol, and isopropanol;
Feature B4: a concentration of lithium ions in the polymer solution containing lithium ions is 0.2 M to 0.8 M, a mass percentage of the polymer in the polymer solution containing lithium ions is 1% to 3%, and a mass ratio of the curing agent to the polymer is 1:100 to 5:100;
Feature B5: anhydrous iron phosphate, a dopant, and the polymer solution containing lithium ions are mixed, and then a resulting mixture is mixed with the curing agent for curing reaction, wherein the dopant is a soluble compound containing a doping element, and the doping element is at least one selected from the group consisting of Al, Ni, Co, Mn, Ti, La, Ce, Cr, Mo, Ca, Ga, V, Nb, Zr, In, Zn, Y, Mg, Na, N, S and F; and a ratio of a total molar amount of iron in the anhydrous iron phosphate and the doping element to a molar amount of a lithium element is controlled to be 1: 1.01 to 1: 1.10;
Feature B6: the curing reaction is carried out by at least one of heating with stirring, UV irradiation with stirring, and microwave irradiation with stirring; when the curing reaction is carried out by heating with stirring, a reaction temperature is controlled between 50 °C and 80 °C; when the curing reaction is carried out by UV irradiation with stirring, a wavelength of light is controlled between 200 nm and 400 nm; and when the curing reaction is carried out by microwave irradiation with stirring , a power of the microwave irradiation is controlled between 200 W and 500 W; and
Feature B7: a solid content of the gel prepared is 30% to 50%.

In alternative embodiments, the gel is fragmented and then subjected to fluidized-bed drying; wherein, the fluidized-bed drying comprises drying a fragmented gel in a fluidized bed with a drying temperature controlled between 80 °C and 120 °C, and an air flow rate controlled between 50 mL/min and 400 mL/min.

In alternative embodiments, a process for preparing the carbon-coated lithium iron phosphate from the precursor has at least one of the following features:
Feature C1: the calcination is carried out at a temperature of 550 °C to 650 °C for a duration of 2 h to 6 h;
Feature C2: the calcination is carried out under an inert atmosphere;
Feature C3: the precursor is fed into a flash dryer for pre-calcination before the calcination, wherein an inlet air temperature of the flash dryer is controlled between 300 °C and 500 °C, an outlet air temperature is controlled between 100 °C and 150 °C, a rotational speed is controlled between 10 Hz and 30 Hz, and a feed frequency is controlled between 10 Hz and 30 Hz; and
Feature C4: after calcination of the precursor, crushing and magnetic separation are performed to obtain the carbon-coated lithium iron phosphate.

In alternative embodiments, a method for blending the carbon-coated lithium iron phosphate with different particle sizes is selected from a first method or a second method as below:
the first method includes: mixing two types of carbon-coated lithium iron phosphate with different particle size distributions, with Dv50 of the two types of carbon-coated lithium iron phosphate with different particle size ranges being Dv50^{a} and Dv50^{b}, respectively, wherein 15 µm≥Dv50^{a}≥2.4 Dv50^{b}≥1 µm; and a mass ratio of the two types of carbon-coated lithium iron phosphate with Dv50^{a} and Dv50^{b} is 20%-35%:65%-80%;
the second method includes: mixing three types of carbon-coated lithium iron phosphate with different particle size distributions, with Dv50 of the three types of carbon-coated lithium iron phosphate with different particle size ranges being Dv50^{a}, Dv50^{b} and Dv50^{c}, respectively, wherein 15 µm≥Dv50^{a}≥2.4 Dv50^{b}≥2.4² Dv50^{c}≥2 µm; and a mass ratio of the three types of carbon-coated lithium iron phosphate with Dv50^{a}, Dv50^{b} and Dv50^{c} is 2%-20%:40%-60%:30%-40%.

In a third aspect, the present disclosure provides a lithium-ion battery including the lithium iron phosphate cathode material according to any one of the aforementioned embodiments or the lithium iron phosphate cathode material prepared by the preparation method according to any one of the aforementioned embodiments.

The present disclosure has the following beneficial effects: the compaction index Øc of the lithium iron phosphate cathode material is determined with a specific method, the compaction index is controlled to fall within a specific range, and the average circularity of larger particles within the range of Dv50-Dv100 is maintained within an appropriate range. Such lithium iron phosphate cathode material exhibits superior particle mobility, enabling rapid particle movement and rearrangement during compaction, facilitating formation of a cathode sheet with high compacted density, and improving the charge and discharge capacity of a battery. Furthermore, particle fracture during compaction can be avoided, imparting high fracture resistance to the material. The lithium-ion battery comprising the lithium iron phosphate cathode material provided in the present disclosure has both high energy density and high capacity retention.

### BRIEF DESCRIPTION OF DRAWINGS

In order to more clearly explain the technical solution of the embodiments of the present disclosure, a brief introduction will be given below to the accompanying drawings required in the embodiments. It should be understood that the following accompanying drawings only illustrate certain embodiments of the present disclosure, and therefore should not be regarded as limiting the scope thereof. For those having ordinary skills in the art, other relevant accompanying drawings can also be obtained based on these drawings without creative efforts.
FIG. 1 shows a density-pressure curve;
FIG. 2 shows a schematic illustration of the curve in FIG. 1 after curve fitting;
FIG. 3 shows a plot of slope versus compaction speed;
FIG. 4 shows transmission electron microscope (TEM) images of Comparative Example 1 and Example 3;
FIG. 5 shows a scanning electron microscope (SEM) image of the lithium iron phosphate cathode material prepared in Example 1; and
FIG. 6 shows a SEM image of the lithium iron phosphate cathode material prepared in Example 3.

### DETAILED DESCRIPTION

In order to more clearly illustrate the objectives, technical solutions, and advantages of the embodiments of the present disclosure, a clear and complete description of the technical solutions in the embodiments of the present disclosure will be made below. The conventional conditions or conditions recommended by the manufacturers shall be followed unless specific conditions are specified in the embodiments. The reagents or instruments used of which the manufacturers are not indicated, are all commercially available conventional products.

An embodiment of the present disclosure provides a lithium iron phosphate cathode material, including a lithium iron phosphate active material and a carbon coating layer on a surface of the lithium iron phosphate active material, such that a carbon-coated lithium iron phosphate cathode material is formed.

An average circularity of particles of the lithium iron phosphate cathode material within a range of Dv50-Dv100 provided in the embodiments of the present disclosure is greater than or equal to 0.6. The particles within such a range are relatively large, and have a significant impact on the overall mobility of the powder material. The average circularity of these particles may be, for example, 0.60, 0.65, 0.70, 0.80, 0.90, 1.00, etc.

The embodiments of the present disclosure creatively define a compaction index, denoted as Øc, for the lithium iron phosphate cathode material, and the compaction index is controlled between 0.4 and 5.0, for example, 0.40, 0.50, 0.80, 1.00, 1.50, 2.00, 2.50, 3.00, 3.50, 4.00, 4.50, 5.00, etc. The compaction index is obtained by a method comprising: obtaining density-pressure curves of the lithium iron phosphate cathode material at different compaction speeds, performing linear fitting (it is required that the goodness of fit r²≥0.99) on the part of each density-pressure curve above 100 MPa (a linearly increasing portion is typically above 100 MPa) to obtain the corresponding slope, constructing a plot of slope versus compaction speed, and subjecting the plot of slope versus compaction speed to linear fitting (it is required that the goodness of fit r²≥0.98) to obtain a fitted line and taking a slope of the fitted line as the compaction index. The specific testing method can be seen GB/T 11106-2022 "Metallic Powder-Determination of Green Strength by Compression of Cylinder Compacts", and linear fitting of the relevant curves is performed using software such as Origin to obtain the fitted line. The compaction index Øc reflects a rate at which a pressure increase rate of the lithium iron phosphate cathode material increases at different compaction speeds, and reflects the particle mobility of the lithium iron phosphate cathode material.

It should be noted that the pressure increase rate of powder materials varies at different compaction speeds, the faster the compaction speed, the greater the pressure increase rate. This is because when pressure is applied, the powder particles dissipate stress through movement and rearrangement. However, if the compaction speed is too fast, the stress cannot be dissipated quickly enough, resulting in a rapid pressure increase. Therefore, the particle mobility of the powder has an impact on their stress dissipation ability. The mobility of particles, that is, the quality of stress dissipation ability, will directly affect their tap density or compacted density, thereby affecting the energy density of a battery. Moreover, particle mobility also directly affects the stability of the cathode material during the cycling, which in turn affects the cycle life and safety. Through extensive experiments, the present disclosure has found that the particle mobility of lithium iron phosphate cathode material is correlated with their particle size distribution, particle morphology, and particle surface properties. Specifically, when the particles of the lithium iron phosphate cathode material have a well-graded particle size distribution, the particles only need a shorter movement path to fill voids and dissipate the stress, resulting in higher particle mobility; when the particles of the lithium iron phosphate cathode material have high circularity, a contact area between particles is minimized, enhancing their relative mobility and thus yielding higher particle mobility; and when the carbon coating layer of the particles of the lithium iron phosphate cathode material is relatively uniform, the friction between particles is reduced, leading to higher particle mobility.

The lithium iron phosphate cathode material with a compaction index Øc of 0.4 to 5 provided in the embodiments of the present disclosure has superior particle mobility. The particles can rapidly move and rearrange during compaction, which facilitates the formation of a cathode sheet with high compacted density to improve the charge and discharge capacity of a battery, while helps prevent particle fracture during compaction. In general, fractured particles may fail to maintain their original conductive network structure, resulting in tortuous electron transport pathways, increased internal resistance, and degraded high-rate discharge performance and efficiency of a battery. Generally, the smaller the compaction index Øc, the better the particle mobility.

In some embodiments, the particle circularity of the lithium iron phosphate cathode material is 0.5 to 1.0. For example, the particle circularity may be 0.5, 0.6, 0.7, 0.8, 0.9, or 1.0, etc.

In some embodiments, the particle strength of the lithium iron phosphate cathode material is 40 MPa to 150 MPa. For example, the particle strength may be 40 MPa, 50 MPa, 60 MPa, 70 MPa, 80 MPa, 90 MPa, 100 MPa, 110 MPa, 120 MPa, 130 MPa, 140 MPa, or 150 MPa, etc. When the lithium iron phosphate cathode material has a compaction index Øc of 0.4 to 5 and a particle strength of 40 MPa to 150 MPa, the lithium iron phosphate cathode material exhibits both favorable particle mobility and high particle mechanical strength, making it not prone to fracture upon compaction. Therefore, the lithium iron phosphate cathode material has a high compacted density, a cathode sheet prepared from such lithium iron phosphate cathode material has a high compacted density and a low internal resistance, and a battery prepared from such cathode sheet has excellent charge and discharge capacity and cycling stability.

In further embodiments, the particle strength of the lithium iron phosphate cathode material is 60 MPa to 120 MPa, and the average circularity of the particles within a range of Dv50-Dv100 is 0.65 to 0.80. It is preferable that both the strength and average circularity of the particles of the lithium iron phosphate cathode material are within the above-mentioned ranges, which further increases the particle mobility and compacted density of the material. The compacted density (under a test condition of 3T) is 1.5g/cm³ to 3.0g/cm³, for example, it may be 1.5 g/cm³, 2.0 g/cm³, 2.5 g/cm³, or 3.0 g/cm³, etc. A mass fraction of the carbon coating layer in the lithium iron phosphate cathode material is 0.5% to 5%, for example, it may be 0.5%, 1.0%, 2.0%, 3.0%, 4.0%, or 5.0%, etc.

Further, a compactibility factor is defined as: compactibility $factor = \frac{Particle strength}{∅ c}$, and the lithium iron phosphate cathode material has a compactibility factor of 120 MPa to 300 MPa. For example, the compactibility factor may be 120 MPa, 150 MPa, 180 MPa, 200 MPa, 230 MPa, 250 MPa, or 300 MPa, etc. The larger the compactibility factor, the stronger the resistance to particle fracture of the lithium iron phosphate cathode material, and the higher the compacted density of an obtained cathode sheet. Consequently, an obtained battery exhibits higher capacity and improved cycling stability.

The embodiments of the present disclosure further provide a preparation method of the lithium iron phosphate cathode material, which includes combining a sol-gel method and a carbothermal reduction method to prepare a carbon-coated lithium iron phosphate with a uniform carbon coating layer and high particle circularity, and blending the carbon-coated lithium iron phosphate with different particle sizes to obtain the lithium iron phosphate cathode material. The steps are as follows:
S1. Preparation of a gel

A soluble lithium salt and a polymer are dissolved in a same solvent to obtain a polymer solution containing lithium ions, the iron phosphate such as anhydrous iron phosphate and the polymer solution containing lithium ions are mixed, and a resulting mixture is then mixed with a curing agent for curing reaction to obtain a gel.

It should be noted that the mixing of anhydrous iron phosphate and lithium ions is achieved by dispersing anhydrous iron phosphate into the polymer solution containing lithium ions, and the polymer is slowly cross-linked to form the gel under stirring, so that the amounts of iron phosphate, lithium ions and polymer contained per unit volume is fixed, which facilitates the preparation of lithium iron phosphate with uniform morphology and consistent surface properties, thereby improving the uniformity of the product and reducing the electrical resistance. Furthermore, as a carbon source for subsequent calcination, the polymer is uniformly coated on the surface of the solid iron phosphate, which is not only beneficial for forming a uniform carbon coating layer, but also improving the circularity of the obtained lithium iron phosphate.

In some embodiments, the soluble lithium salt is at least one selected from the group consisting of lithium chloride, lithium hydroxide, lithium acetate, and lithium oxalate, and the soluble lithium salt may be any one or more of the above. The solvent is at least one selected from the group consisting of water, ethanol, methanol, and isopropanol, and the solvent may be any one or more of the above.

In some embodiments, the polymer is a soluble polymer containing at least one of hydroxyl, vinyl, and epoxy, and the polymer contains any one or more of the above reactive groups. The curing agent is selected based on the reactive groups contained in the polymer. When the polymer contains hydroxyl, the curing agent is glycidyl ether, for example, the curing agent may be ethylene glycol diglycidyl ether, or polyethylene glycol diglycidyl ether, etc; when the polymer contains vinyl, the curing agent is a soluble photoinitiator, for example, the curing agent may be Photoinitiator 2959, but is not limited thereto; and when the polymer contains epoxy, the curing agent is polyol, such as ethylene glycol and glycerol, which reacts with the epoxy group to form the gel.

Specifically, the polymer may be hyaluronic acid, vinyl grafted hydroxymethylcellulose, agar, guar gum, alginate, or aliphatic epoxy resin, etc.

Further, a concentration of lithium ions in the polymer solution containing lithium ions is 0.2 M to 0.8 M, for example, it may be 0.2 M, 0.3 M, 0.4 M, 0.5 M, 0.6 M, 0.7 M, or 0.8 M, etc. A mass percentage of the polymer in the polymer solution containing lithium ions is 1% to 3%, for example, it may be 1%, 2%, or 3%, etc. The use amount of the curing agent is determined according to the use amount of the polymer, and a mass ratio of the curing agent to the polymer is controlled to be 1:100 to 5:100, for example, it may be 1:100, 2:100, 3:100, 4:100, or 5:100, etc.

In some embodiments, the curing reaction is carried out by at least one of heating with stirring, UV irradiation with stirring, and microwave irradiation with stirring. The curing reaction may be carried out by any one or more of the above, which may be selected according to the type of the polymer. When the curing reaction is carried out by heating with stirring, a reaction temperature is controlled between 50 °C and 80 °C, for example, the reaction temperature may be 50 °C, 55 °C, 60 °C, 65 °C, 70 °C, 75 °C, or 80 °C, etc. When the curing reaction is carried out by UV irradiation with stirring, a wavelength of light is controlled between 200 nm and 400 nm, for example, the wavelength of light may be 200 nm, 250 nm, 300 nm, 350 nm, or 400 nm, etc. When the curing reaction is carried out by microwave irradiation with stirring, a power of the microwave irradiation is controlled between 200 W and 500 W, for example, the power of the microwave irradiation may be 200 W, 300 W, 400 W, or 500 W, etc. A solid content of a prepared gel is controlled to be 30% to 50% by adjusting a reaction time, for example, the solid content may be 30%, 35%, 40%, 45%, or 50%, etc.

In some embodiments, a doping element is introduced into the gel. Specifically, the anhydrous iron phosphate, a dopant and the polymer solution containing lithium ions are mixed, stirred for uniform dispersion, added with the curing agent under stirring, to allow the curing reaction after the completion of addition. The dopant is a soluble compound containing a doping element, and the doping element is at least one selected from the group consisting of Al, Ni, Co, Mn, Ti, La, Ce, Cr, Mo, Ca, Ga, V, Nb, Zr, In, Zn, Y, Mg, Na, N, S and F. Further, the doping element may be any one or more of the above. A ratio of a total molar amount of iron in the anhydrous iron phosphate and the doping element to a molar amount of a lithium element is controlled to 1:1.01 to 1:1.10, for example 1:1.01, 1:1.02, 1:1.03, 1:1.04, 1:1.05, 1:1.06, 1:1.07, 1:1.08, 1:1.09, or 1:1.10, etc.

### S2. Fragmentation and Drying

The gel is fragmented and then dried, and impurities such as a solvent on surface are removed to obtain a precursor.

In some embodiments, the fragmentation may be carried out by sieving, rolling, or grinding, etc., to prevent agglomeration of particles.

In some embodiments, a fluidized bed may be used for fluidized-bed drying to avoid agglomeration. The fluidized-bed drying comprises drying the fragmented gel in a fluidized bed with a drying temperature controlled between 80 °C and 120 °C, and an air flow rate controlled between 50 mL/min and 400 mL/min, so as to obtain precursor particles with relatively uniform particle size. Specifically, the drying temperature may be 80 °C, 90 °C, 100 °C, 110 °C, or 120 °C, etc., and the air flow rate may be 50 mL/min, 100 mL/min, 200 mL/min, 300 mL/min, or 400 mL/min, etc.

### S3. Calcination

The precursor is subjected to calcination to allow carbonation of the polymer, to prepare a carbon-coated lithium iron phosphate.

In some embodiments, the calcination is carried out at a temperature controlled between 550 °C and 650 °C, for example 550 °C, 580 °C, 600 °C, 630 °C, or 650 °C, etc., and for a duration of 2 h to 6 h, for example 2 h, 3 h, 4 h, 5 h, or 6 h, etc. The calcination may be carried out under an inert atmosphere, which may be nitrogen or argon, etc.

In some embodiments, the precursor is fed into a flash dryer for pre-calcination before calcination. An inlet air temperature of the flash dryer is controlled between 300 °C and 500 °C, an outlet air temperature is controlled between 100 °C and 150 °C, a rotational speed is controlled between 10 Hz and 30 Hz, and a feed frequency is controlled between 10 Hz and 30 Hz. Pre-calcination in the flash dryer facilitates rapid particle shrinkage at an elevated temperatures, improving internal bonding strength within the particles of and thus enhancing the mechanical strength of the material.

In some embodiments, after the precursor is calcined, a calcined precursor is subjected to crushing and magnetic separation to obtain the carbon-coated lithium iron phosphate. The agglomerated particles formed during calcination is dispersed by crushing, and magnetic impurities are removed by magnetic separation.

### S4. Particle Size Grading

The carbon-coated lithium iron phosphate with different particle sizes are blended using a particle size grading method to enhance a grading effect of the lithium iron phosphate cathode material, thereby increasing the tap density and compacted density, and ultimately improving a capacity of a battery.

In some embodiments, a method for blending the carbon-coated lithium iron phosphate with different particle sizes is selected from a first method or a second method. The first method involves performing particle size grading using two types of carbon-coated lithium iron phosphate with different particle size distributions, and the second method involves performing particle size grading using three types of carbon-coated lithium iron phosphate with different particle size distributions.

Further, The first method for blending the carbon-coated lithium iron phosphate with different particle sizes includes: mixing two types of carbon-coated lithium iron phosphate with different particle size distributions in a predetermined ratio, with Dv50 of the two types of carbon-coated lithium iron phosphate with different particle size ranges being Dv50^{a}, Dv50^{b}, respectively, wherein 15 µm≥Dv50^{a}≥2.4 Dv50^{b}≥1 µm, that is to say, the Dv50^{a} of large particles is greater than or equal to 2.4 times the Dv50^{b} of small particles, and the values of Dv50^{a} and 2.4 Dv50^{b} are both between 1 µm and 15 µm, for example 1 µm, 3 µm, 5 µm, 8 µm, 10 µm, 13 µm, or 15µm, etc. A mass ratio of two types of carbon-coated lithium iron phosphate with Dv50^{a} and Dv50^{b} is 20%-35%: 65%-80%, and a mass ratio of the carbon-coated lithium iron phosphate with large particles and the carbon-coated lithium iron phosphate with small particles may be 20%: 80%, 25%: 75%, 30%: 70%, or 35%: 65%, etc.

The second method for blending the carbon-coated lithium iron phosphate with different particle sizes includes: mixing three types of carbon-coated lithium iron phosphate with different particle size distributions in a predetermined ratio, with Dv50 of carbon-coated lithium iron phosphate with three different particle size ranges of large particles, medium particles, and small particles being Dv50^{a}, Dv50^{b} and Dv50^{c}, respectively, wherein 15 µm≥Dv50^{a}≥2.4 Dv50^{b}≥2.4² Dv50^{c}≥2 µm, that is to say, the Dv50^{a} of large particles is greater than or equal to 2.4 times the Dv50^{b} of medium particles, and also greater than or equal to 2.4² times the Dv50^{c} of small particles, and the values of Dv50^{a}, 2.4 Dv50^{b}, and 2.4² Dv50^{c} are all between 2 µm and 15 µm, for example 2 µm, 5 µm, 8 µm, 10 µm, 13 µm, or 15 µm, etc. A mass ratio of three types of carbon-coated lithium iron phosphate particles with Dv50^{a}, Dv50^{b} and Dv50^{c}, namely large particles, medium particles, and small particles is 2%-20%:40%-60%:30%-40%, for example 2%:60%:38%, 5%:55%:40%, 8%:57%:35%, 10%:53%:37%, 13%:57%:30%, 15%:45%:40%, 18%:43%:39%, or 20%:40%:40%, etc.

The embodiments of the present disclosure further provide a cathode sheet for a lithium-ion battery, including the lithium iron phosphate cathode material provided in the embodiments of the present disclosure, which has improved compacted density. The cathode sheet of the lithium-ion battery may further include a cathode current collector, and a cathode active material coating formed on at least one surface of the cathode current collector, wherein the lithium iron phosphate cathode material is present in the cathode active material coating as a cathode active material.

The embodiments of the present disclosure further provide a lithium-ion battery, including the cathode sheet for the lithium-ion battery provided in the embodiments of the present disclosure, which has improved charge and discharge capacity. The lithium-ion battery further includes an anode sheet, an electrolytic solution and a separator, etc., which form a complete battery structure. The specific types of the anode sheet, the electrolytic solution and the separator are not limited. During the charging and discharging process of the lithium-ion battery, the active ions are reversibly intercalated into and deintercalated from the cathode sheet and the anode sheet, and the electrolytic solution serves to conduct ions between the cathode sheet and the anode sheet.

The embodiments of the present disclosure further provide a device including the above-mentioned lithium-ion battery (secondary battery), a battery module or a battery pack. The secondary battery, battery module or battery pack can serve as a power source for the device or as an energy storage unit for the device. The device may be, but is not limited to, a mobile device (e.g., a mobile phone, a laptop computer, etc.), an electric vehicle (e.g., a battery electric vehicle, a hybrid electric vehicle, a plug-in hybrid electric vehicle, an electric bicycle, an electric scooter, an electric golf cart, and an electric truck, etc.), an electric train, a marine vessel and a satellite, and an energy storage system, etc.

The features and performance of the present disclosure are further described in detail below in conjunction with the Examples.

The present disclosure provided a lithium iron phosphate cathode material as shown in Table 1, a cathode sheet and a battery were prepared using the lithium iron phosphate cathode material, and the performance of the cathode sheet and battery were tested, as shown in Table 2.

Performance testing methods and conditions:
Resistance of electrode sheet: The resistance of electrode sheet was measured with a BER2100 multifunctional electrode sheet resistance meter from Initial Energy Science & Technology, China, at 10 different positions, and an average value was calculated.

Tap density: The tap density was determined according to GB/T30835-2014.

Compacted density: The compacted density of the cathode material was determined according to GB/T30835-2014.

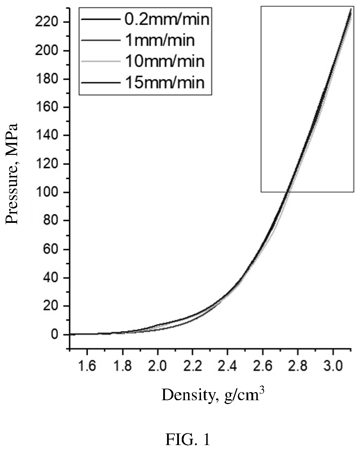

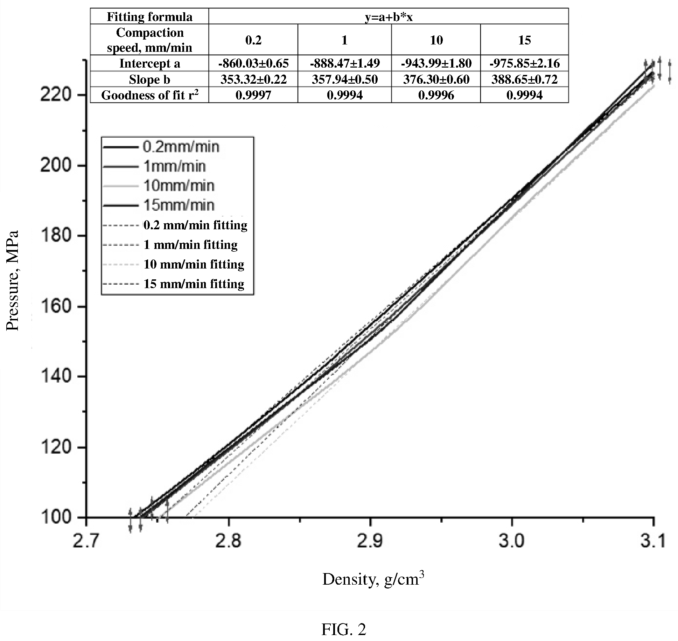

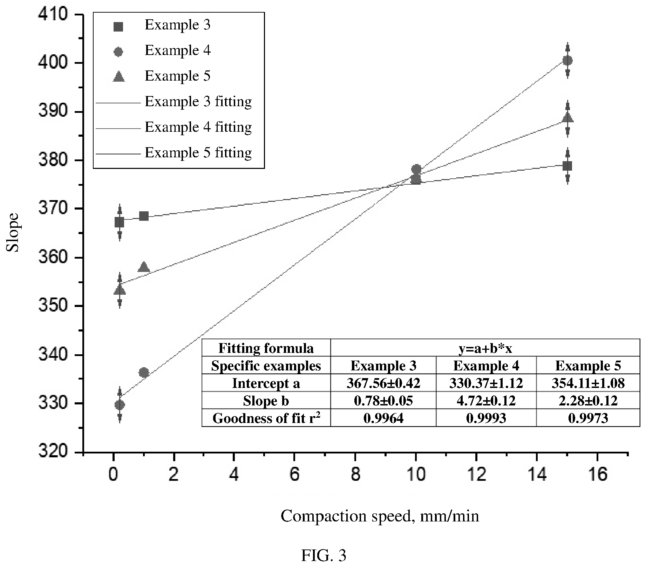

Compaction index: 1±0.01 g of lithium iron phosphate cathode material was loaded into a steel die, and the powder in the steel die was continuously compacted using an SANS Model CMT5000 universal mechanical testing machine, wherein a platen displacement rate (compaction speed) was selected from at least three different values within a range 0.2-15 mm/min, for example 0.2 mm/min, 1 mm/min, 10 mm/min, and 15 mm/min, respectively. The mechanical testing machine automatically recorded an applied force and a crossbeam displacement during the compaction process. Based on the known geometry of the steel die and the mass of the powder, the powder density and compaction pressure were calculated, thereby yielding density-pressure curves at different compaction speeds. A linearly increasing portion of the density-pressure curve (typically above 100 MPa) was subjected to linear fitting (it was required that the goodness of fit r²≥0.99) to obtain a corresponding slope 1. Each sample was measured at least three times for each compaction speed, to obtain an average value of slope 1. Then, a plot of the average value of slope 1 versus compaction speed was constructed. The plot of the average value of slope 1 versus compaction speed was subjected to linear fitting to yield slope 2 as the compaction index, and data was considered valid only when the goodness of fit r²≥0.98. The testing method could be seen GB/T 11106-2022 "Metallic Powder-Determination of Green Strength by Compression of Cylinder Compacts", and the curves were subjected to linear fitting using software such as Origin, etc. Before subjecting the density-pressure curve to linear fitting, the curve could be appropriately smoothed. For example, the smoothing tool in Origin could be employed with the Lowess model, and a span parameter was 0-0.5. Taking Example 5 as an example, the testing procedure for determining the compaction index was provided, as shown in FIGS. 1, 2, and 3.

Carbon content (wt%): The carbon content was determined according to GB/T30835-2014.

Chemical composition analysis: The chemical composition analysis was performed using Model PE Avio200 Inductively Coupled Plasma Optical Emission Spectrometry (ICP-OES).

Particle size: The particle size was measured using a Model MS3000 laser particle size analyzer in accordance with GB/T 19077.1. Dv50 and Dv100 were determined for the lithium iron phosphate cathode material, and Dv10, Dv50, Dv90 and a broadening coefficient Span were determined for the carbon-coated lithium iron phosphate, wherein Span=(Dv90-Dv10)/Dv50.

Particle strength: The particle strength was measured using an MCT-series micro-compression tester. A single particle was placed between a flat upper platen and a lower compression plate, and applied with a test force from an indenter at a constant rate. Then, a deformation amount of the particle sample was automatically measured, and particle fracture was identified by an abrupt drop in the force. The particle strength was calculated from a maximum force F before the abrupt drop in force occurred according to Equation (1), and at least 10 particles from each sample were selected for testing and an average value was calculated. $Particle strength = 2.8 \times F / \left({πd}^{2}\right)$ Equation (1)

F represents the maximum force value before the abrupt drop in force, in mN; and d represents the particle diameter, in µm.

Compacted density of electrode sheet: a lithium iron phosphate material, a binder (poly(vinylidenefluoride)), and a conductive carbon black were weighed in a mass ratio of 95:3:2; poly(vinylidenefluoride) (PVDF) was dissolved in N-Methylpyrrolidone (NMP) to obtain a 5 wt% binder solution, and then the lithium iron phosphate material and the conductive carbon black were added and stirred to obtain a slurry; the slurry was applied onto an aluminum foil with a thickness of 20 µm using a 300 µm coating applicator, dried at 100 °C for 8 hours to yield a dried electrode sheet with a single-sided areal density controlled to be 400±1 g/m²; then, the dried electrode sheet was calendered with a roller temperature of 40 °C and a pressure applied by the roller of 6 MPa to obtain a cathode sheet; a thickness of the cathode sheet was measured using a micrometer with an accuracy of 0.5 µm and a compacted density PD of the cathode sheet was calculated as PD = areal density of the cathode sheet÷(thickness of the cathode sheet-20 µm).

Battery energy density: the cathode sheet prepared was assembled into a stacked-type battery, and a volumetric energy density and a gravimetric energy density of the battery were determined. A preparation method of the anode sheet was as follows: graphite, conductive carbon black, carboxymethyl cellulose (CMC), and butadiene styrene rubber were weighed in a mass ratio of 95.5:1:1.5:2; the CMC was dissolved in water, added with the graphite and conductive carbon black and stirred under vacuum, and then added with the butadiene styrene rubber and stirred under vacuum; a resulting product was sieved to obtain a anode slurry with a solid content of 50%; and the anode slurry was coated onto a copper foil, cold-pressed, and slit to obtain a anode sheet with a compacted density of 1.55 g/cm³ and an active material layer thickness of 110 µm. The electrolytic solution was ethylene carbonate (EC)/ dimethyl carbonate (DMC)/ ethyl methyl carbonate (EMC)+LiPF₆+ additive, with a concentration of LiPF₆ of 1 M, and the separator was a 20 µm PE ion-exchange membrane; an aluminum-laminated film was used as a casing, sealed by thermal sealing; an assembled battery was formed using a BLUEKEY charging cabinet under the following conditions: constant-current charging at 0.1C to 3.8V, followed by discharging at 0.1C to 2.0V; and the energy density of the battery after formation was then tested.

Cycle capacity retention rate: the battery was cycled at 1C rate for 1000 cycles, with each cycle involving constant-current charging at 1C to 3.8V followed by constant-current discharging at 1C to 2.0V, and the capacity retention rate=discharge capacity at 1000^{th} cycle ÷ discharge capacity at 1^{st} cycle×100%.

TEM: The TEM was taken by a FEI Titan Cubed G2 60-300 Transmission Electron Microscopy.

SEM: The SEM was taken by a Nova NanoSEM 450. Circularity testing method: circularity was determined based on SEM images using ImageJ image analysis software. Individual particles suitable for analysis were identified by ImageJ. Then, a projected area and the circularity of each particle were calculated by ImageJ according to C=(4×π×A)/G², wherein A was an area of the projective plane, G was a perimeter of the projective plane, and C was particle circularity. The particle circularity of the lithium iron phosphate cathode materials in Examples 2-3, 6, and 8-10 was 0.5 to 1.0. Dv50 and Dv100 of the lithium iron phosphate cathode material were measured using a Model MS3000 laser particle size analyzer in accordance with GB/T 19077.1. The particles with a projected area of greater than or equal to π (Dv50/2)² were selected from the SEM images as a sample, and an average circularity of the sample, consisting of no fewer than 30 particles, was calculated, thereby obtaining the average circularity of the particles within the range of Dv50-Dv100.

**Table 1 Parameter Test Results of Products in Examples**

| Samples | Mass percentage of carbon coating layer, % | Average circularity of particles in the range of Dv50-Dv100 | Compaction index, Øc | Particle strength, MPa | Compactibil ity factor, MPa | Compact ed density (3T), g/cm³ |
|---|---|---|---|---|---|---|
| Example 1 | 1.372 | 0.6659 | 2.2 | 160 | 72.73 | 2.26 |
| Example 2 | 1.284 | 0.7486 | 0.4 | 43 | 107.50 | 2.62 |
| Example 3 | 1.234 | 0.7018 | 0.8 | 118 | 147.50 | 2.58 |
| Example 4 | 1.516 | 0.6105 | 4.7 | 120 | 25.53 | 2.17 |
| Example 5 | 1.427 | 0.6624 | 2.3 | 121 | 52.61 | 2.38 |
| Example 6 | 1.316 | 0.6824 | 0.8 | 135 | 168.75 | 2.52 |
| Example 7 | 1.338 | 0.6724 | 0.8 | 64 | 80.00 | 2.59 |
| Example 8 | 1.224 | 0.7127 | 0.4 | 112 | 280.00 | 2.59 |
| Example 9 | 1.247 | 0.7024 | 3.2 | 124 | 38.75 | 2.26 |
| Example 10 | 1.241 | 0.7247 | 0.6 | 142 | 236.67 | 2.58 |
| Comparative | 1.202 | 0.6988 | 5.3 | 135 | 25.47 | 1.72 |
| Example 1 | | | | | | |
| Comparative Example 2 | 1.243 | 0.6225 | 6.8 | 131 | 19.26 | 1.70 |
| Comparative Example 3 | 1.518 | 0.6002 | 5.5 | 125 | 22.73 | 2.01 |

**Table 2 Electrode sheet and Battery Performance Test Results**

| Samples | Compacted density of electrode sheet, g/cm³ | Resistance of electrode sheet, Ω | Volumetric energy density, kWh/m³ | Gravimetric energy density, Wh/kg | Capacity retention rate, % |
|---|---|---|---|---|---|
| Example 1 | 2.49 | 0.82 | 267 | 194 | 98 |
| Example 2 | 2.76 | 0.96 | 284 | 209 | 93 |
| Example 3 | 2.64 | 0.88 | 275 | 199 | 95 |
| Example 4 | 2.50 | 0.92 | 268 | 193 | 94 |
| Example 5 | 2.56 | 0.90 | 271 | 195 | 93 |
| Example 6 | 2.60 | 0.85 | 271 | 195 | 96 |
| Example 7 | 2.69 | 0.92 | 279 | 204 | 93 |
| Example 8 | 2.62 | 0.90 | 272 | 198 | 96 |
| Example 9 | 2.50 | 0.92 | 265 | 192 | 94 |
| Example 10 | 2.64 | 0.84 | 275 | 200 | 96 |
| Comparative Example 1 | 2.24 | 1.07 | 254 | 173 | 95 |
| Comparative Example 2 | 2.22 | 1.14 | 252 | 170 | 95 |
| Comparative Example 3 | 2.37 | 0.98 | 256 | 185 | 94 |

According to the analysis of Tables 1 and 2, it can be seen that the lithium iron phosphate cathode material provided in the present disclosure possesses both high compacted density and excellent cycling stability, and the battery prepared therefrom exhibit both high energy density and high capacity retention rate.

### Example 1

This Example provided a preparation method of a lithium iron phosphate cathode material, including the following steps.
(1) Lithium chloride, titanyl sulfate and hyaluronic acid were dissolved in deionized water to obtain a polymer solution containing lithium ions; the polymer solution containing lithium ions was added with anhydrous iron phosphate and stirred to maintain uniform dispersion, and then added with ethylene glycol diglycidyl ether; and a resulting mixture was heated to 60 °C under continuous stirring until a reaction product became too viscous to stir, and the reaction was terminated to obtain a gel with a solid content of 48.2%.
A concentration of lithium ions in the polymer solution containing lithium ions was 0.2 M, and a mass percentage of the polymer in the polymer solution containing lithium ions was 1%; an addition amount of the curing agent was 3% (all were percentages by mass, unless otherwise stated) of the polymer; and anhydrous iron phosphate and titanyl sulfate were added such that a ratio of a total molar amount of Fe and Ti to a molar amount of Li was 1:1.05 , and a molar ratio of Fe to Ti was 0.95:0.05.
(2) The gel was fragmented by pressing it through an 80-mesh sieve under pressure, and then fed into a fluidized bed for drying to a constant weight to obtain a precursor.
A fluidized bed was operated at a temperature of 120 °C and an air flow rate of 100 mL/min.
(3) The precursor was fed into a flash dryer for pre-calcinationto yield a pre-calcined precursor.
The flash dryer was operated at an inlet air temperature of 500 °C, an outlet air temperature of 100 °C, a rotational speed of 30 Hz, and a feed frequency of 30 Hz.
(4) The pre-calcined precursor was subjected to calcination, crushing and magnetic separation successively to obtain a carbon-coated lithium iron phosphate.
Calcination was carried out under an inert atmosphere (nitrogen, unless otherwise stated) at a temperature of 650 °C for 5 hours.
(5) Different types of carbon-coated lithium iron phosphate prepared from anhydrous iron phosphate with different particle sizes were blended in a predetermined ratio to obtain the lithium iron phosphate cathode material.

**Table 3 Grading Scheme of Example 1**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 500-1000 nm | 1.42 | 1.4 | 30 |
| 2 | Particle size of 100-400 nm | 0.47 | 1.6 | 70 |

### Example 2

This Example provided a preparation method of a lithium iron phosphate cathode material, including the following steps.
(1) Lithium hydroxide and vinyl grafted hydroxymethylcellulose were dissolved in deionized water to obtain a polymer solution containing lithium ions; the polymer solution containing lithium ions was added with anhydrous iron phosphate and stirred to maintain uniform dispersion, and then added with a photoinitiator 2959; and a resulting mixture was subjected to UV radiation (wavelength: 254 nm) under continuous stirring until a reaction product became too viscous, and the reaction was terminated to obtain a gel with a solid content of 30.5%.
A concentration of lithium ions in the polymer solution containing lithium ions was 0.8 M, and a mass percentage of the polymer in the polymer solution containing lithium ions was 3%; an addition amount of the curing agent was 3% of the polymer; and anhydrous iron phosphate was added according to a molar ratio of Fe to Li of 1:1.1.
(2) The gel was fragmented by pressing it through an 80-mesh sieve under pressure, and then fed into a fluidized bed for drying to a constant weight to obtain a precursor.
A fluidized bed was operated at a temperature of 80 °C and an air flow rate of 400 mL/min.
(3) The precursor was subjected to calcination, crushing and magnetic separation successively to obtain a carbon-coated lithium iron phosphate.
Calcination was carried out under an inert atmosphere at a temperature of 550 °C for 6 hours.
(4) Different types of carbon-coated lithium iron phosphate prepared from anhydrous iron phosphate with different particle sizes were blended in a predetermined ratio to obtain the lithium iron phosphate cathode material.

**Table 4 Grading Scheme of Example 2**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 500-1000 nm | 1.55 | 1.5 | 20 |
| 2 | Particle size of 100-400 nm | 0.52 | 1.6 | 80 |

### Example 3

This Example provided a preparation method of a lithium iron phosphate cathode material, including the following steps.
(1) Lithium acetate and agar were dissolved in deionized water at 50 °C to obtain a polymer solution containing lithium ions; the polymer solution containing lithium ions was added with anhydrous iron phosphate and stirred to maintain uniform dispersion, and then added with polyethylene glycol diglycidyl ether (Mn 500); and a resulting mixture was heated to 80 °C under continuous stirring until a reaction product became too viscous to stir, and the reaction was terminated to obtain a gel with a solid content of 42.7%.
A concentration of lithium ions in the polymer solution containing lithium ions was 0.5 M, and a mass percentage of the polymer in the polymer solution containing lithium ions was 2%; an addition amount of the curing agent was 2.5% of the polymer; and anhydrous iron phosphate was added according to a molar ratio of Fe to Li of 1:1.01.
(2) The gel was fragmented by pressing it through an 80-mesh sieve under pressure, and then fed into a fluidized bed for drying to a constant weight to obtain a precursor.
A fluidized bed was operated at a temperature 100 °C and an air flow rate of 200 mL/min.
(3) The precursor was fed into a flash dryer for pre-calcination to yield a pre-calcined precursor.
The flash dryer was operated at an inlet air temperature of 400 °C, an outlet air temperature of 150 °C, a rotational speed of 30 Hz, and a feed frequency of 20 Hz.
(4) The pre-calcined precursor was subjected to calcination, crushing and magnetic separation successively to obtain a carbon-coated lithium iron phosphate.
Calcination was carried out under an inert atmosphere at a temperature of 600 °C for 3 hours.
(5) Different types of carbon-coated lithium iron phosphate prepared from anhydrous iron phosphate with different particle sizes were blended in a predetermined ratio to obtain the lithium iron phosphate cathode material.

**Table 5 Grading Scheme of Example 3**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 500-1000 nm | 1.36 | 1.2 | 30 |
| 2 | Particle size of 100-400 nm | 0.54 | 1.8 | 70 |

### Example 4

The difference between Example 4 and Example 3 was that the gel was dried using a conventional drying method, that is, the gel was dried to a constant weight in a blasting oven at 100 °C.

**Table 6 Grading Scheme of Example 4**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 500-1000 nm | 1.41 | 1.8 | 30 |
| 2 | Particle size of 100-400 nm | 0.55 | 2.0 | 70 |

### Example 5

The difference between Example 5 and Example 3 were that: in step (1), the mass percentage of the polymer in the polymer solution containing lithium ions was 3%; and the addition amount of the curing agent was 5% of the polymer.

**Table 7 Grading Scheme of Example 5**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 500-1000 nm | 1.45 | 1.3 | 30 |
| 2 | Particle size of 100-400 nm | 0.58 | 1.7 | 70 |

### Example 6

(1) Lithium oxalate, zirconium acetate, and guar gum were dissolved in deionized water at 50 °C to obtain a polymer solution containing lithium ions; the polymer solution containing lithium ions was added with anhydrous iron phosphate and stirred to maintain uniform dispersion, and then added with ethylene glycol diglycidyl ether; and a resulting mixture was heated to 80 °C under continuous stirring until a reaction product became too viscous to stir, and the reaction was terminated to obtain a gel with a solid content of 34.9%.
A concentration of lithium ions in the polymer solution containing lithium ions was 0.5 M, and a mass percentage of the polymer in the polymer solution containing lithium ions was 2%; an addition amount of the curing agent was 1% of the polymer; and the anhydrous iron phosphate and dopant were added such that a ratio of a total molar amount of Fe and dopant metal elements to a molar amount of Li was 1:1.1, and a molar ratio of iron to zirconium was 0.98:0.02.
(2) The gel was fragmented by pressing it through an 80-mesh sieve under pressure, and then fed into a fluidized bed for drying to a constant weight to obtain a precursor.
A fluidized bed was operated at temperature of 100 °C and an air flow rate of 200 mL/min.
(3) The precursor was fed into a flash dryer for pre-calcination to yield a pre-calcined precursor.
The flash dryer was operated at an inlet air temperature of 500 °C, an outlet air temperature of 150 °C, a rotational speed of 10 Hz, and a feed frequency of 30 Hz.
(4) The pre-calcined precursor was subjected to calcination, crushing and magnetic separation successively to obtain a carbon-coated lithium iron phosphate.
Calcination was carried out under an inert atmosphere at a temperature of 550 °C for 4 hours.
(5) Different types of carbon-coated lithium iron phosphate prepared from anhydrous iron phosphate with different particle sizes were blended in a predetermined ratio to obtain the lithium iron phosphate cathode material.

**Table 8 Grading Scheme of Example 6**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 1.0-1.5 µm | 2.22 | 1.6 | 7 |
| 2 | Particle size of 300-800 nm | 0.90 | 1.8 | 58 |
| 3 | Particle size of 100-200 nm | 0.35 | 1.4 | 35 |

### Example 7

The difference between Example 7 and Example 3 was that in step (3), the inlet air temperature of the flash dryer was 300 °C and the outlet air temperature was 100 °C.

**Table 9 Grading Scheme of Example 7**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 1.0-1.5 µm | 2.28 | 1.7 | 7 |
| 2 | Particle size of 300-800 nm | 0.94 | 2.1 | 58 |
| 3 | Particle size of 100-200 nm | 0.39 | 1.55 | 35 |

### Example 8

The difference between Example 8 and Example 3 was that the addition amount of the curing agent was 1% of the polymer in step (1).

**Table 10 Grading Scheme of Example 8**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 500-1000 nm | 1.52 | 1.2 | 30 |
| 2 | Particle size of 100-400 nm | 0.62 | 1.6 | 70 |

### Example 9

The difference between Example 9 and Example 3 was that the addition amount of the curing agent was 5% of the polymer in step (1).

**Table 11 Grading Scheme of Example 9**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 500-1000 nm | 1.48 | 1.4 | 30 |
| 2 | Particle size of 100-400 nm | 0.60 | 2.2 | 70 |

### Example 10

The difference between Example 10 and Example 3 was that in step (3), the flash dryer was operated at an inlet air temperature of 500 °C, an outlet air temperature of 150 °C, a rotational speed of 30 Hz, and a feed frequency of 10 Hz.

**Table 12 Grading Scheme of Example 10**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 500-1000 nm | 1.38 | 1.2 | 30 |
| 2 | Particle size of 100-400 nm | 0.55 | 1.7 | 70 |

### Comparative Example 1

The difference between Comparative Example 1 and Example 3 was that no curing agent was added in step (1). The steps were as follows.

Lithium acetate and agar were dissolved in deionized water at 50 °C to obtain a polymer solution containing lithium ions; the polymer solution containing lithium ions was added with anhydrous iron phosphate and stirred to maintain uniform dispersion; and a resulting mixture was heated to 80 °C under continuous stirring until the solvent was completely evaporated to obtain a precursor 1.

A concentration of lithium ions in the polymer solution containing lithium ions was 0.5 M, a mass percentage of the polymer in the polymer solution containing lithium ions was 2%; and anhydrous iron phosphate was added according to a molar ratio of Fe to Li of 1:1.01.

(2) The precursor 1 was fed into a fluidized bed for drying to a constant weight to obtain a precursor 2.

A fluidized bed was operated at a temperature of 100 °C and an air flow rate of 200 mL/min.

(3) The precursor 2 was fed into a flash dryer for pre-calcination to yield a pre-calcined precursor.

The flash dryer was operated at an inlet air temperature of 400 °C, an outlet air temperature of 150 °C, a rotational speed of 30 Hz, and a feed frequency of 20 Hz.

(4) The pre-calcined precursor was subjected to calcination, crushing and magnetic separation successively to obtain a carbon-coated lithium iron phosphate.

Calcination was carried out under an inert atmosphere at a temperature of 600 °C for 3 hours.

(5) Different types of carbon-coated lithium iron phosphate prepared from anhydrous iron phosphate with different particle sizes were blended in a predetermined ratio to obtain the lithium iron phosphate cathode material.

**Table 13 Grading Scheme of Comparative Example 1**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 500-1000 nm | 1.54 | 2.5 | 30 |
| 2 | Particle size of 100-400 nm | 0.63 | 2.2 | 70 |

### Comparative Example 2

Anhydrous iron phosphate, lithium acetate, and agar powder were ball-milled to obtain a mixture, which was then placed in a rotary kiln for calcination at 600 °C for 6 hours, followed by crushing and magnetic separation to yield a carbon-coated lithium iron phosphate. The anhydrous iron phosphate and the lithium acetate were mixed according to a molar ratio of n(Fe):n(Li)=1:1.01. The mixing proportion of anhydrous iron phosphate, lithium acetate, and agar powder was the same as that in Example 3.

**Table 14 Grading Scheme of Comparative Example 2**

| No. | Specification of anhydrous iron phosphate | Dv50 of carbon-coated lithium iron phosphate, µm | Span of carbon-coated lithium iron phosphate | Mass percentage of carbon-coated lithium iron phosphate |
|---|---|---|---|---|
| 1 | Particle size of 500-1000 nm | 1.38 | 3.1 | 30 |
| 2 | Particle size of 100-400 nm | 0.55 | 4.7 | 70 |

### Comparative Example 3

The carbon-coated lithium iron phosphate with No. 1 in Example 4 was provided in Comparative Example 3.

### Performance characterization:

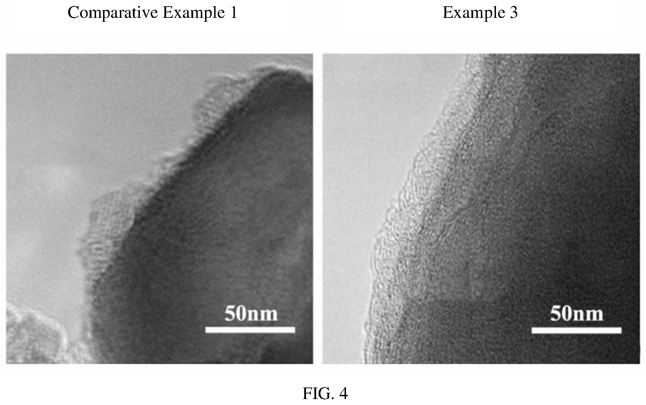

TEM images of the lithium iron phosphate cathode materials prepared in Comparative Example 1 and Example 3 are shown in FIG. 4. It can be seen that the lithium iron phosphate cathode material prepared in Example 3 exhibits better uniformity.

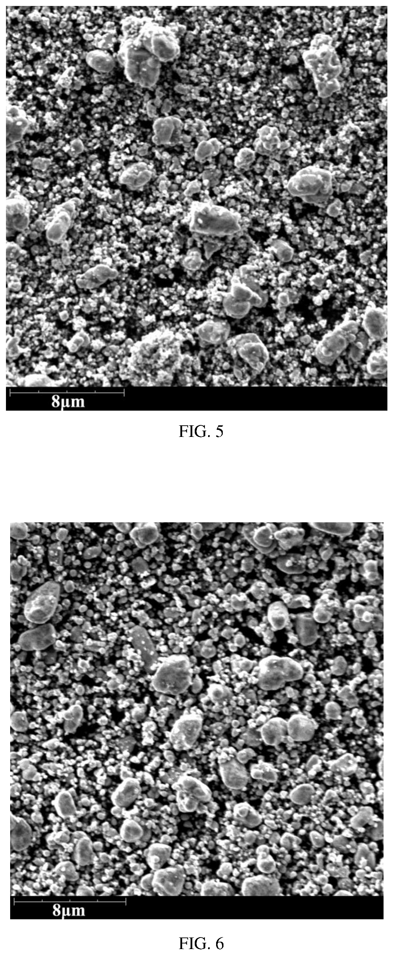

The SEM image of the lithium iron phosphate cathode material prepared in Example 1 is shown in FIG. 5, and the SEM image of the lithium iron phosphate cathode material prepared in Example 3 is shown in FIG. 6. It can be seen that the prepared lithium iron phosphate cathode materials contain large and small particles, and the average circularity of the large particles (above Dv50) in Example 3 is higher than that in Example 1.

Based on Tables 1 and 2, and the preparation methods, the Examples and Comparative Examples are analyzed as below.

Comparative Example 1 exhibits an excessively high compaction index, resulting in a low compacted density and a high resistance of the prepared electrode sheet, and thus a low energy density. This is attributed to the absence of a curing agent, which significantly compromises the uniformity of the carbon coating layer (see TEM images), resulting in a high compaction index.

Example 1 exhibits a compaction index Øc in a range of 0.4 to 5.0, but its particle strength does not fall within a desired range of 40 MPa to 150 MPa. Example 1 possesses relatively high particle strength. Although Example 1 and Example 5 show similar compaction indices, the compacted density of Example 1 is lower due to its excessively high particle strength. This is because that Example 5 has a lower particle strength, and during the determination of the compacted density, the particles will be fragmented to release internal stress, thereby improving the compacted density. However, the fragmentation of particles will make the electron/ion transport path become longer, leading to increased resistance of the electrode sheet, and the fragmentation of particles will also cause deteriorated cycle performance.

Example 2 exhibits a compaction index Øc in a range of 0.4 to 5.0, a particle strength in a range of 40 MPa to 150 MPa but not satisfying 60 MPa to 120 MPa, and a compactibility factor not satisfying 120 MPa to 300 MPa. Due to a large amount of lithium iron phosphate particles with a small particle size, Example 2 has a low compaction index, and thus has a high compacted density but a high resistance of electrode sheet. In addition, the particle strength of Example 2 is relatively low, resulting in a lower cycle capacity retention rate.

Examples 3 to 5 exhibit similar particle strengths but different compaction indices. From the perspective of percentage content of carbon coating layer, average circularity, and grading scheme of the three, it can be seen that the difference in compaction indices results from the percentage content of carbon coating layer and the average circularity. From the performance testing, it can be seen that as the compaction index increases, the compacted density of the powder decreases, resulting in a decrease in the compacted density of the electrode sheet. A slight increase in the resistance of electrode sheet is due to the fact that an increase in carbon content to a certain degree is beneficial for improving conductivity, but a decrease in circularity will lead to an increase in particle interface resistance. Therefore, the change in resistance of electrode sheet is not significant under the combined effect of these two factors.

Examples 3, 6, and 7 exhibit similar compaction indices but different particle strengths. The higher the particle strength, the lower the compacted density of the powder and electrode sheet, but the lower the resistance of electrode sheet, the higher the cycle capacity retention rate. Although the average circularity of Examples 6 and 7 is relatively small, their grading effect is good, and there are more lithium iron phosphate particles with smaller particle size, so their compaction index was similar to Example 3. This indicates that the mobility of the lithium iron phosphate cathode material powder can be regulated by adjusting the process parameters of the preparation method in the present disclosure.

Examples 3, 6, 8, and 10 exhibit compactibility factors within a range of 120 MPa to 300 MPa. Therefore, compared with other examples, they strike an ideal balance among compacted density, conductivity of electrode sheet, and capacity retention rate, and thus have the best overall performance.

During the preparation processes of Examples 3, 8 and 9, different amounts of a curing agent are added. It can be seen from the results that the larger the addition amount of a curing agent, that is, the higher the crosslinking degree of a gel, the larger the compaction index of the obtained lithium iron phosphate cathode material, and a slightly increase in the particle strength. Further analysis shows that there is little difference in the circularity, the percentage content of carbon coating layer, and grading scheme among the three. However, when no curing agent is added (Comparative Example 1), the compaction index of the lithium iron phosphate material is higher than that of Example 9 instead, this is because no gel can be obtained when no curing agent is added, and the number of iron phosphate, lithium ions and polymer contained per unit volume cannot be fixed, resulting in severe agglomeration of the obtained lithium iron phosphate material. Consequently, the obtained lithium iron phosphate material has a larger Dv50 and an even larger span. In addition, from the TEM images of Example 3 and Comparative Example 1, it can be seen that Comparative Example 1 exhibits poorer uniformity of the carbon coating layer as compared with Example 3. This poorer uniformity is attributed to the absence of a curing agent, which consequently led to a higher compaction index. These results indicate that that the addition and the addition amount of a curing agent has a significant impact on the uniformity of the carbon coating layer, and either absence or excess of the curing agent is unfavorable for the formation of a uniform coating layer, resulting in an increase in compaction index.

During the preparation processes of Examples 3, 7, and 10, different flash drying conditions are used. Specifically, the higher the inlet air temperature during flash drying, the higher the particle strength of the material and the better the circularity. However, due to the fact that there is a larger amount of lithium iron phosphate with small particle size in the grading scheme of Example 7, Examples 3 and 7 have similar compaction indices. Moreover, due to the fact that Example 10 has a similar grading scheme to Example 3, Example 10 has a higher average circularity and thus a lower compaction index. In Example 10, although the powder has higher hardness, the compacted density of the powder was similar to Example 3 due to its lower compaction index.

Comparative Example 2 is prepared by a solid-phase method, in which the polymer and lithium salt are mixed with anhydrous iron phosphate, resulting in a higher compaction index of the obtained lithium iron phosphate cathode material. Therefore, the compacted density of the powder and electrode sheet is lower, and the resistance of electrode sheet is higher.

Compared to Example 4, no grading is performed in Comparative Example 3, resulting in a relatively higher compaction index.

The above examples are only the preferred examples of the present disclosure, and are not intended to limit the present disclosure. For those skilled in the art, various modifications and changes may be made to the present disclosure. Any modifications, equivalent substitutions, and improvements, etc., made within the spirit and principles of the present disclosure should be included within the scope of protection of the present disclosure.

### Industrial Applicability

In the present disclosure, the compaction index Øc of the lithium iron phosphate cathode material is determined with a specific method, the compaction index is controlled to fall within a specific range, and the average circularity of larger particles within the range of Dv50-Dv100 is maintained within an appropriate range. Such lithium iron phosphate cathode material exhibits superior particle mobility, enabling rapid particle movement and rearrangement during compaction, facilitating formation of a cathode sheet with high compacted density, and improving the charge and discharge capacity of a battery. Furthermore, particle fracture during compaction can be avoided, imparting high fracture resistance to the material. The preparation method of the lithium iron phosphate cathode material is simple and easy to implement, suitable for industrial-scale production, and possesses favorable industrial applicability.

## Claims

1. A lithium iron phosphate cathode material, comprising a lithium iron phosphate active material, and a carbon coating layer on a surface of the lithium iron phosphate active material;
wherein an average circularity of particles of the lithium iron phosphate cathode material within a range of Dv50-Dv100 is greater than or equal to 0.6; and
a compaction index Øc of the lithium iron phosphate cathode material is 0.4 to 5.0, and the compaction index is obtained by a method comprising:
obtaining density-pressure curves of the lithium iron phosphate cathode material at different compaction speeds, performing linear fitting on the part of each density-pressure curve above 100 MPa to obtain the corresponding slope , constructing a plot of slope versus compaction speed, and subjecting the plot of slope versus compaction speed to linear fitting to obtain a fitted line and taking a slope of the fitted line as the compaction index.

2. The lithium iron phosphate cathode material of claim 1, wherein a particle strength of the lithium iron phosphate cathode material is 40 MPa to 150 MPa.

3. The lithium iron phosphate cathode material of claim 2, wherein the lithium iron phosphate cathode material satisfies at least one of the following features:
Feature A1: the particle strength is 60 MPa to 120 MPa;
Feature A2: the average circularity of the particles in the range of Dv50-Dv100 is 0.65 to 0.80;
Feature A3: a compacted density is 1.5 g/cm³ to 3.0 g/cm³; and
Feature A4: a mass fraction of the carbon coating layer in the lithium iron phosphate cathode material is 0.5% to 5%.

4. The lithium iron phosphate cathode material of any one of claims 1 to 3, wherein a compactibility factor is defined as: compactibility $factor = \frac{Particle strength}{∅ c}$; and
the lithium iron phosphate cathode material has a compactibility factor of 120 MPa to 300 MPa.

5. A preparation method of the lithium iron phosphate cathode material of any one of claims 1 to 4, comprising mixing iron phosphate and a polymer solution containing lithium ions, and then mixing a resulting mixture with a curing agent for curing reaction to obtain a gel; wherein the polymer solution containing lithium ions is obtained by dissolving a soluble lithium salt and a polymer in a solvent;
fragmenting the gel, and then drying to obtain a precursor;
subjecting the precursor to calcination to prepare a carbon-coated lithium iron phosphate; and
blending the carbon-coated lithium iron phosphate with different particle sizes.

6. The preparation method of claim 5, wherein a process for preparing the gel has at least one of the following features:
Feature B1: the polymer is a soluble polymer containing at least one of hydroxyl, vinyl, and epoxy; the curing agent is selected based on reactive groups contained in the polymer; when the polymer contains hydroxyl, the curing agent is glycidyl ether; when the polymer contains vinyl, the curing agent is a soluble photoinitiator; and when the polymer contains epoxy, the curing agent is polyol;
Feature B2: the soluble lithium salt is at least one selected from the group consisting of lithium chloride, lithium hydroxide, lithium acetate, and lithium oxalate;
Feature B3: the solvent is at least one selected from the group consisting of water, ethanol, methanol, and isopropanol;
Feature B4: a concentration of lithium ions in the polymer solution containing lithium ions is 0.2 M to 0.8 M, a mass percentage of the polymer in the polymer solution containing lithium ions is 1% to 3%, and a mass ratio of the curing agent to the polymer is 1:100 to 5:100;
Feature B5: anhydrous iron phosphate, a dopant, and the polymer solution containing lithium ions are mixed, then a resulting mixture is mixed with the curing agent for curing reaction, wherein the dopant is a soluble compound containing a doping element, and the doping element is at least one selected from the group consisting of Al, Ni, Co, Mn, Ti, La, Ce, Cr, Mo, Ca, Ga, V, Nb, Zr, In, Zn, Y, Mg, Na, N, S and F; and a ratio of a total molar amount of iron in the anhydrous iron phosphate and the doping element to a molar amount of a lithium element is 1:1.01 to 1:1.10;
Feature B6: the curing reaction is carried out by at least one of heating with stirring, UV irradiation with stirring, and microwave irradiation with stirring; when the curing reaction is carried out by heating with stirring, a reaction temperature is controlled between 50 °C and 80 °C; when the curing reaction is carried out by UV irradiation with stirring, a wavelength of light is controlled between 200 nm and 400 nm; and when the curing reaction is carried out by microwave irradiation with stirring, a power of the microwave irradiation is controlled between 200 W and 500 W; and
Feature B7: a solid content of the gel prepared is 30% to 50%.

7. The preparation method of claim 5, wherein the gel is fragmented and then subjected to fluidized-bed drying; and
the fluidized-bed drying comprises drying a fragmented gel in a fluidized bed with a drying temperature controlled between 80 °C and 120 °C, and an air flow rate controlled between 50 mL/min and 400 mL/min.

8. The preparation method of claim 5, wherein a process for preparing the carbon-coated lithium iron phosphate from the precursor has at least one of the following features:
Feature C1: the calcination is carried out at a temperature of 550 °C to 650 °C for a duration of 2 h to 6 h;
Feature C2: the calcination is carried out under an inert atmosphere;
Feature C3: the precursor is fed into a flash dryer for pre-calcination before the calcination, wherein an inlet air temperature of the flash dryer is controlled between 300 °C and 500 °C, an outlet air temperature is controlled between 100 °C and 150 °C, a rotational speed is controlled between 10 Hz and 30 Hz, and a feed frequency is controlled between 10 Hz and 30 Hz; and
Feature C4: after calcination of the precursor, crushing and magnetic separation are performed to obtain the carbon-coated lithium iron phosphate.

9. The preparation method of claim 5, wherein a method for blending the carbon-coated lithium iron phosphate with different particle sizes is selected from a first method or a second method;
the first method comprises: mixing two types of carbon-coated lithium iron phosphate with different particle size distributions, with Dv50 of the two types of carbon-coated lithium iron phosphate with different particle size ranges being Dv50^{a} and Dv50^{b}, respectively, wherein 15 µm≥Dv50^{a}≥2.4 Dv50^{b}≥1 µm; and a mass ratio of the two types of carbon-coated lithium iron phosphate with Dv50^{a} and Dv50^{b} is 20%-35%:65%-80%;
the second method comprises: mixing three types of carbon-coated lithium iron phosphate with different particle size distributions, with Dv50 of the three types of carbon-coated lithium iron phosphate with different particle size ranges being Dv50^{a}, Dv50^{b} and Dv50^{c}, respectively, wherein 15 µm≥Dv50^{a}≥2.4 Dv50^{b}≥2.4² Dv50^{c}≥2 µm; and a mass ratio of the three types of carbon-coated lithium iron phosphate with Dv50^{a}, Dv50^{b} and Dv50^{c} is 2%-20%:40%-60%:30%-40%.

10. A lithium-ion battery, comprising the lithium iron phosphate cathode material of any one of claims 1 to 4 or the lithium iron phosphate cathode material prepared by the preparation method of any one of claims 5 to 9.
